# EUROPÄISCHE PATENTANMELDUNG

(11) **EP 2 584 864 A1**
(43) Veröffentlichungstag der Anmeldung: **24.04.2013**
(21) Anmeldenummer: 12189393.7
(22) Anmeldetag: 22.10.2012
(51) Int. Cl.: H05B 3/84

(54) **Beheizbare Scheibe**

(30) Priorität: 20.10.2011 DE 102011054645
(71) Anmelder: Bäumler, Peter, 52066 Aachen (DE)
(72) Erfinder: Bäumler, Peter, 52066 Aachen (DE)
(74) Vertreter: Naeven, Ralf

(57) **Zusammenfassung**

Es wird eine beheizbare Scheibe, insbesondere eine Fahrzeugscheibe, vorgestellt mit einer oberen (10) und einer unteren Scheibenkante (9) sowie seitlichen Scheibenkanten, einem transparenten Sichtfeld (3) mit einem zentralen Hauptsichtfeld, einer Schar (12 - 20) von zumindest zum Teil im Sichtfeld angeordneten und zwischen Sammelkontaktleisten (11, 31, 32) unterschiedlicher Polarität verlaufenden Heizdrähten (8), und einem zumindest eine Teilanzahl der Heizdrähte (8) aufweisenden, entlang der unteren Scheibenkante (9) unterhalb des Hauptsichtfeldes angeordneten unteren Heizfeldbereich (24). Die beheizbare Scheibe kennzeichnet sich durch einen zumindest eine Teilanzahl der Heizdrähte (8) aufweisenden, zumindest zum Teil im transparenten Sichtfeld (3) und entlang der oberen Scheibenkante (10) oberhalb des Hauptsichtfeldes angeordneten oberen Heizfeldbereich (23), wobei im oberen Heizfeldbereich (23) die Heizdrähte (8) zueinander ungekreuzt und in ihrer Hauptverlaufsrichtung zumindest auf der überwiegenden Verlaufsstrecke im Wesentlichen parallel zur oberen Scheibenkante (10) verlaufen. Dabei ist zwischen dem oberen (10) und unteren Heizfeldbereich (9) ein das Hauptsichtfeld überdeckender mittlerer Scheibenbereich vorgesehen, wobei der mittlere Scheibenbereich entweder einen mittleren Heizfeldbereich (25) mit einer gegenüber sowohl dem oberen (10) als auch dem unteren Heizfeldbereich (9) geringeren auf die Fläche bezogenen Heizleistungsdichte oder einen Sichtbereich ohne integrierte Widerstandsheizung umfasst. Insbesondere kann eine mit Heizdrähten (8) aufgebaute Ringheizung (5) vorgesehen werden, die das Hauptsichtfeld umgibt.

## Beschreibung

Die Erfindung betrifft eine beheizbare Scheibe, insbesondere eine Fahrzeugscheibe mit den Merkmalen des Oberbegriffs des Anspruchs 1.

Beheizbare Scheiben finden Anwendung insbesondere im Fahrzeugbereich als Seitenscheiben, Heckscheiben oder Windschutzscheiben. Glasscheiben können von außen, z. B. mittels Warmluftdüsen beheizt werden oder weisen im Glasverbund Heizmittel auf, z. B. eine Schar von Heizdrähten, eine metallische Coatingschicht oder eine metallhaltige Heizfolie. Bei der elektrischen Glasbeheizung mittels Coatingschicht, Heizfolie oder Heizdrähten wird die elektrische Heizung über Kontaktsammelleitungen zugeführt, die in der Regel an gegenüberliegenden Rändern der Scheibe angeordnet sind. Heizdrähte können mit den üblichen Bordspannungen von Fahrzeugen betrieben werden. Obwohl die Heizdrähte sehr dünn ausgeführt werden, sind sie in der Regel noch optisch wahrnehmbar und werden daher nicht von allen Abnehmern ohne weiteres in beliebigen Anordnungen akzeptiert.

Heizfolien, die zur Ausbildung einer möglichst hohen Lichttransparenz sehr dünn ausgeführt werden müssen, weisen einen entsprechend hohen Flächenwiderstand auf und benötigen bei den üblichen langen Strompfaden oftmals eine höhere Betriebsspannung. Verbesserungen in den letzten Jahren haben zu Heizfolien geführt, die auch mit den üblichen Betriebsspannungen eines Fahrzeuges betrieben werden können, wobei jedoch die erzielten Heizleistungen und/oder die Transparenz noch verbesserungswürdig sind.

Aus der DE 10 2007 008 833 A1 ist eine beheizbare Scheibe der eingangs genannten Art bekannt, die zum einen eine elektrisch beheizbare Beschichtung aufweist, die sich über einen wesentlichen Teil der Fläche der Scheibe, insbesondere über deren Sichtfeld erstreckt und über zwei niederohmige Sammelleiter an eine Spannungsquelle angeschlossen ist. Gleichzeitig ist hierzu in einem von der heizbaren Beschichtung nicht beheizbaren Flächenbereich, der sich vorzugsweise am Rand der Scheibe befindet, ein Heizelement mit niederohmigen Leitelementen, wie Drähten und/oder gedruckten Leiterbahnen vorgesehen. Damit wird zum einen eine unabhängige Beheizung des von der Beschichtung nicht erreichten Flächenbereichs und zum anderen eine Verkürzung der Stromwege über die vergleichsweise hochohmige Beschichtung erreicht. Die vorgenannte Druckschrift offenbart es auch, zwei oder mehr getrennt elektrisch betreibbare Heizfelder in einer Verbundscheibe vorzusehen, wobei z. B. in der Scheibenmitte eine Teilung gegeben sein kann. Für zwei Heizfelder kann man dabei einen gemeinsamen Masseleiter verwenden, so dass nur einer der Sammelleiter in zwei Abschnitte (bei zwei Heizfeldern) unterteilt werden muss. Das zusätzliche Heizelement kann z. B. zur Beheizung eines die Parkposition von Scheibenwischern umfassenden Bereichs dienen.

Aus der DE 296 06 071 U1 ist eine elektrisch beheizbare Windschutzscheibe aus Verbundglas bekannt, die im Bereich der Scheibenwischerruhestellung mit in der thermoplastischen Zwischenschicht eingebetteten parallel geschalteten elektrischen Heizwiderstandsdrähten versehen ist. Es ist offenbart, die Heizdrähte am unteren Scheibenrand sowie am rechten und linken Rand in mindestens einer Schleife verlaufen zu lassen. Dabei können als Sammelschienen wirkende Metallfolien eng benachbart zueinander an der unteren Scheibenkante angeordnet sein. Durch den schleifenförmigen Verlauf der Heizwiderstandsdrähte können optisch störende metallische Verbindungsleitungen vermieden werden. Die Schleifen im Bereich der seitlichen Ränder sollen zum Abtauen möglicher Schneereste dienen, die durch den oder die Scheibenwischer dorthin gedrückt wurden.

Aus der DE 37 24 014 A1 ist eine Kraftfahrzeugscheibe mit aufgebrachtem schwarzen Sichtschutzrandstreifen bekannt, bei der ein Schwarzbeschichtungsleiter eingesetzt wird, der am unteren Scheibenrand im Bereich der Scheibenwischerablage als Heizung dient. Dabei kann der Sichtschutzrandstreifen durch den Schwarzbeschichtungsleiter selbst gebildet werden. In diesem Fall kann der Schwarzbeschichtungsleiter an allen vier Scheibenrändern als umlaufender Streifen ausgeführt werden. Dabei ist es auch offenbart, damit den gesamten Rand der Fahrzeugscheibe besonders zu heizen, beispielsweise um ein thermisches Ausglasen zu ermöglichen. Der Schwarzbeschichtungsleiter kann auch neben einem gesonderten Sichtschutzrandstreifen vorgesehen werden. Der Schwarzbeschichtungsleiter bietet somit keine Beheizung im durchsichtigen Bereich der Scheibe an.

Aus der DE 20 2008 017 877 U1 ist eine transparente Scheibe mit einer beheizbaren Beschichtung bekannt, die zwischen den Sammelleitern und der beheizbaren Beschichtung niederohmige leitende Strukturen vorsieht, so dass hierdurch die Länge der heizbaren Beschichtung in Stromrichtung verkürzt werden kann. Die Strukturen können gitterförmig sein.

Aus der DE 39 04 490 A1 ist eine beheizbare Scheibe bekannt, bei der die Heizdrähte gleichzeitig als Antennen für den AM-Empfang und den FM-Empfang dienen. Um beide Frequenzbereiche zu bedienen, sind zwei Leiteranordnungen in zwei verschiedenen Heizleiterbereichen vorgesehen, wobei die Heizleiter im dargestellten Ausführungsbeispiel parallel zur oberen und unteren Scheibenkante verlaufen.

Es ist Aufgabe der Erfindung, eine beheizbare Scheibe der eingangs genannten Art mit einer alternativen Anordnung von Heizdrähten zur Verfügung zu stellen, welche zum einen das Hauptsichtfeld nicht oder nur im geringeren Maße beeinträchtigt und zum anderen eine hinreichende Heizwirkung aufweist.

Diese Aufgabe wird durch die kennzeichnenden Merkmale des Anspruchs 1 gelöst. Demnach wird ein zwischen der oberen Scheibenkante und dem Hauptsichtfeld angeordneter oberer Heizfeldbereich vorgesehen, der zumindest zum Teil im transparenten Sichtfeld liegt und dessen Heizdrähte zueinander ungekreuzt und zumindest in ihrer Hauptverlaufsrichtung zumindest auf der überwiegenden Verlaufsstrecke im Wesentlichen parallel zur oberen Scheibenkante verlaufen, wobei zwischen dem oberen und unteren Heizfeldbereich ein das Hauptsichtfeld überdeckender mittlerer Scheibenbereich vorgesehen ist, wobei der mittlere Scheibenbereich entweder einen mittleren Heizfeldbereich mit einer gegenüber sowohl dem oberen als auch dem unteren Heizfeldbereich geringeren auf die Fläche bezogenen Heizleistungsdichte oder einen Sichtbereich ohne integrierte Widerstandsheizung umfasst.

"Im Wesentlichen parallel" bedeutet vorliegend, dass die Parallelität nicht exakt sein muss. So können die Heizdrähte gemäß der Erfindung einem leicht geschwungenen Verlauf der oberen Scheibenkante folgen, müssen dies aber nicht. Insbesondere gelten auch solche Heizdrähte als im Wesentlichen parallel zur oberen Scheibenkante, die bei eingebauter Scheibe, insbesondere Windschutzscheibe, parallel zur Standfläche der die Scheibe tragenden Vorrichtung, zum Beispiel des Fahrzeuges, verlaufen, während die obere Scheibenkante leicht geschwungen ist. So werden im Sinne der Erfindung Heizdrähte als im Wesentlichen parallel zu einer Scheibenkante verstanden, wenn ihre Hauptverlegerichtung im Mittel weniger als 15° von der Richtung der Scheibenkante abweicht. Entsprechendes gilt für die Unteransprüche, in denen Heizdrähte im Wesentlichen parallel zur unteren oder seitlichen Scheibenkante hin verlaufen.

Zudem bezieht sich die Parallelität des Verlaufs der Heizdrähte stets auf eine Hauptverlegerichtung. Bei geradlinig verlegten Heizdrähten entspricht die Hauptverlegerichtung der Richtung der Heizdrahtlinie. Heizdrähte können jedoch auch gewellt, z. B. sinusförmig oder sinusähnlich, verlaufen. Bei gewelltem Verlauf entspricht die Hauptverlegerichtung einer gedachten Mittellinie der Wellung.

Der Ausdruck "zumindest auf der überwiegenden Verlaufsstrecke" bedeutet, dass mehr als 50 % der Verlaufsstrecke des Heizdrahtes den genannten Bedingungen genügt. Teile der Verlaufsstrecken, die nicht parallel zur entsprechenden Scheibenkante sind, können sich im Bereich der Kontaktsammelschienen oder auch durch eine Richtungsumkehr ergeben.

Das Sichtfeld ist der komplette transparente und im eingebauten Zustand durchsichtige Bereich der beheizbaren Scheibe. Das Hauptsichtfeld ist ein Bereich innerhalb des Sichtfeldes, der gegenüber dem restlichen Sichtfeld besondere Anforderungen an Transparenz und/oder optischer Störungsfreiheit erfüllen soll. So dürfen zum Zeitpunkt der Erfindung in Deutschland z. B. im auf der Fahrerseite eines Fahrzeugs befindlichen Hauptsichtfeld des Fahrers, was ein Teilbereich des gesamten, z.B. für Fahrer und Beifahrer vorgesehenen Hauptsichtfeldes sein kann, Reparaturen von Steinschlagschäden ohne Austausch der gesamten Scheibe nicht durchgeführt werden. Das Hauptsichtfeld des Kfz-Fahrers im Sinne der vorgenannten Reparaturvorschrift ist definitionsgemäß näherungsweise rechteckig, mit Zentrum in der horizontalen Blicklinie des Fahrers und weist eine Breite von etwa 40 cm und eine Höhe von etwa 50 cm auf. Das Hauptsichtfeld im Sinne der Erfindung ist ein gegenüber dem Sichtfeld kleinerer, innerhalb des Sichtfelds der Scheibe gelegener und dessen Zentrum überdeckender zusammenhängender Bereich und überdeckt bevorzugt im Falle einer Windschutzscheibe das oben definierte Hauptsichtfeld des Fahrers.

Mit dem oberen Heizfeldbereich ist eine konzentrierte Heizung außerhalb des Hauptsichtfeldes gegeben, die die Durchsicht durch das Hauptsichtfeld somit nicht beeinträchtigt. Für einen das Hauptsichtfeld umfassenden mittleren Scheibenbereich wird entweder ein mittlerer Heizfeldbereich mit einer gegenüber sowohl dem oberen als auch dem unteren Heizfeldbereich geringeren auf die Fläche bezogenen Heizleistungsdichte oder ein Sichtbereich ohne integrierte Widerstandsheizung vorgesehen.

Wird ein mittlerer Heizfeldbereich mit Heizleistung vorgesehen, so bestehen aufgrund der niedrigeren Heizleistungsdichte verbesserte Möglichkeiten, die integrierten Heizmaßnahmen derart zu wählen, dass keine oder nur geringe Sichtbeeinträchtigungen gegeben sind.

Die Heizleistungsdichten im oberen und unteren Heizfeldbereich können unterschiedlich zueinander oder aber auch im Wesentlichen gleich sein. Die Heizleistungsdichte im mittleren Heizfeldbereich beträgt bevorzugt höchstens 50%, weiter bevorzugt höchstens 40%, weiter bevorzugt höchstens 30 % und weiter bevorzugt höchstens 20% der Heizleistungsdichte des oberen und unteren Heizfeldbereichs oder der niedrigeren der beiden Heizleitungsdichten des oberen oder unteren Heizfeldbereichs, sofern diese unterschiedlich sind.

Es kann vorgesehen sein, eine Regelung oder Steuerung vorzusehen, die für sämtliche Heizfeldbereiche gemeinsam wirkt. Es ist auch denkbar, einzelne Heizfeldbereiche gesondert zu regeln oder zu steuern. Im Fall einer gesonderten Steuerung oder Regelung beziehen sich die im vorstehenden Absatz genannten Prozentzahlen auf die jeweils maximal einstellbaren Heizleistungsdichten

Die höhere Leistungsdichte im oberen Heizfeldbereich unterbindet Kältebrücken zur oberen Scheibenkante und unterstützt somit jegliche Heizungsvariante für das Hauptsichtfeld. Hinzu kommen Wärmeleitungseffekte vom oberen Heizfeldbereich in das Hauptsichtfeld hinein. Im Falle einer im Winter mit Eis oder Schnee bedeckten Fahrzeugscheibe würden durch die hohe Heizleistungsdichte im oberen Heizfeldbereich das dort befindliche Eis oder der Schnee zuerst aufgetaut und das hierdurch erwärmte und hinab laufende Wasser zum Abtauen des tiefer liegenden Scheibenbereichs beitragen.

Es ist auch denkbar, zwischen dem oberen und unteren Heizfeldbereich einen Sichtbereich ohne eine in der Scheibe integrierte Widerstandsheizung vorzusehen. Damit wäre quasi ein mittlerer Heizfeldbereich ohne Heizleistung gegeben. Auf Grund der Heizleistungen im oberen und unteren Heizfeldbereich kann möglicherweise auf Grund von Wärmeleitungseffekten eine hinreichend rasche Beheizung auch des Hauptsichtfeldes erreicht werden. Zusätzlich kann die Beheizung durch ein Heizgebläse unterstützt sein.

Bei der beheizbaren Glasscheibe handelt es sich bevorzugt um eine Verbundglasscheibe, bei der die elektrischen Heizmittel, z.B. die Heizdrähte, im Inneren des Glasverbundes, also zwischen zwei Scheibenelementen des Verbundes, angeordnet sind.

Der erfindungsgemäß ausgestaltete obere Heizfeldbereich bildet die Grundlage für zahlreiche vorteilhafte Erfindungsvarianten, welche beispielhaft in den Unteransprüchen definiert sind.

So kann die erfindungsgemäße beheizbare Scheibe so ausgebildet werden, dass der untere Heizfeldbereich entsprechend zum oberen Heizfeldbereich mit Heizdrähten versehen wird, die zueinander ungekreuzt und in ihrer Hauptverlaufsrichtung zumindest auf der überwiegenden Verlaufsstrecke parallel zur unteren Scheibenkante verlaufen.

So kann im mittleren Heizfeldbereich eine Flächenheizung vorgesehen sein, insbesondere eine solche mit einer leitfähigen beheizbaren Beschichtung, z. B. einer metallischen Coating-Schicht, oder mit einer Folie. Im Falle der Verbundglasscheibe befindet sich die Flächenheizung vorzugsweise innerhalb der Scheibe, d. h. zwischen zwei Scheibenelementen des Verbundes.

Durch die oberen und unteren Heizfeldbereiche kann die Flächenheizung auf das Hauptsichtfeld beschränkt werden. Auf Grund der hierdurch möglichen kleineren Fläche kann auch mit der typischerweise durch eine Fahrzeugelektronik zur Verfügung gestellten Bordspannung eine befriedigende Heizleistungsdichte erreicht werden. Die Heizleistungsdichte im Hauptsichtfeld kann aber auf Grund der unterstützenden Wirkung vom oberen und gegebenenfalls unteren Heizfeldbereich gering gehalten werden, um zum Beispiel eine Folie dünner und damit mit einer höheren Transparenz ausgestalten zu können.

Im mittleren Heizfeldbereich kann jedoch auch eine Drahtheizung vorgesehen werden, deren Drähte gegenüber dem oberen und/oder unteren Heizfeldbereich deutlich vergrößerte Abstände zueinander aufweisen. Hierdurch wird auch bei Verwendung von Heizdrähten die Durchsicht durch das Hauptsichtfeld kaum beeinträchtigt. Alternativ zu einem größeren Abstand zwischen Heizdrähten oder zusätzlich hierzu können auch verringerte Drahtquerschnitte und/oder höhere spezifische Widerstände der Heizdrähte vorgesehen werden. Die Heizdrähte im mittleren Heizfeldbereich können parallel oder im Wesentlichen parallel zu den Heizdrähten im oberen und/oder unteren Heizfeldbereich verlaufen. Hierdurch ist es möglich, die Heizdrähte sämtlicher Heizfeldbereiche mit lediglich zwei an den seitlichen Scheibenkanten verlaufenden Sammelkontaktschienen mit Strom zu versorgen.

Die erfindungsgemäße Scheibe kann auch so ausgeführt werden, dass zumindest entlang einer der seitlichen Scheibenkanten und mindestens zum Teil im transparenten Sichtfeld und neben dem Hauptsichtfeld ein seitlicher Heizfeldbereich vorgesehen ist. Dabei verlaufen in dem mindestens einen seitlichen Heizfeldbereich die Heizdrähte zueinander ungekreuzt und in ihrer Hauptverlaufsrichtung zumindest auf der überwiegenden Verlaufsstrecke im Wesentlichen parallel zur nächstgelegenen seitlichen Scheibenkante. Die seitlichen Heizfeldbereiche sind somit im Wesentlichen so ausgestaltet wie der obere und/oder untere Heizfeldbereich. Dies kann so ausgestaltet werden, dass der untere, der obere und zwei seitliche Heizfeldbereiche eine das Hauptsichtfeld umschließende Ringheizung bilden. Eine solche Ringheizung kann, zum Beispiel im Bereich der Sammelkontaktschienen, unterbrochen sein. Eine solche das Hauptsichtfeld umgebende Ringheizung kann ohne Überschneidung mit dem Hauptsichtfeld ohne weiteres 50 % der gesamten Fläche der beheizbaren Scheibe, insbesondere einer Windschutzscheibe, überdecken. Eine derartige Ringheizung sorgt auf dem vollen Umfang für eine Verhinderung von Kältebrücken zwischen dem Hauptsichtfeld und sämtlichen Scheibenkante, so dass der zentrale Scheibenbereich mit deutlich geringerer Heizleistungsdichte beheizt werden oder unbeheizt bleiben kann.

Die Ringheizung kann dabei so ausgebildet werden, dass die daran beteiligten Heizdrähte jeweils sämtliche am Rand angeordneten Heizfeldbereiche, also den oberen, die beiden seitlichen und den unteren Heizfeldbereich, durchlaufen. In diesem Fall werden lediglich zwei Sammelkontaktschienen benötigt. Es können aber auch Varianten mit einer größeren Anzahl von Sammelkontaktschienen vorgesehen werden, bei denen Heizdrähte jeweils durch einen, zwei oder durch drei unterschiedliche entlang der Scheibenkanten angeordnete Heizfeldbereiche verlaufen.

Beheizbare Scheiben, insbesondere Fahrzeugscheiben, sind an ihrem Rand oftmals mit opaken Sichtschutzbereichen versehen, zum Beispiel um Klebestellen abzudecken. Die seitlichen Heizfeldbereiche, der untere und der obere Heizfeldbereich können an diesem opaken Sichtschutzrand jeweils anschließen oder von diesem auch zum Teil abgedeckt sein. Insbesondere im unteren Heizfeldbereich, der gleichzeitig oftmals als Parkposition für den oder die Scheibenwischer dient, kann es sinnvoll sein, den Heizfeldbereich auch im Sichtschutzrand vorzusehen. Es besteht die Möglichkeit, den Abstand zwischen den Heizdrähten in Richtung auf das Hauptsichtfeld größer werden zu lassen, wodurch der Übergang vom Sichtschutzrand zum Hauptsichtfeld für das Auge verträglicher und weniger krass gestaltet werden kann. Auf diese Weise können die Heizdrähte die Funktion des von den Fahrzeugscheiben bekannten teilopaken Übergangsbereichs übernehmen. Ein solcher teilopaker Übergangsbereich ist oftmals punktartig mit zum Hauptsichtfeld hin abnehmender Dichte der opaken Punkte ausgeführt.

Ein solcher punktierter teilopaker Sichtschutz-Übergangsbereich kann sich ohne weiteres auch mit einem der seitlichen oder dem unteren oder oberen Heizfeldbereich überschneiden. Es ist auch denkbar, dass die jeweiligen Heizfeldbereiche sich an dem teilopaken Sichtschutz-Übergangsbereich anschließen.

Die Heizfeldbereiche können eine senkrecht zur zugehörigen Scheibenkante gemessene Breite von maximal 150 mm, vorzugsweise maximal 120 mm, weiter vorzugsweise maximal 90 mm, vorzugsweise maximal 60 mm und weiter vorzugsweise maximal 40 mm im transparenten Bereich der Scheibe aufweisen. Die optimale Breite hängt dabei von der Größe der Scheibe und der Geometrie des gewünschten Hauptsichtfelds ab.

Es ist auch denkbar, innerhalb einer beheizbaren Scheibe mindestens zwei getrennte Hauptsichtfelder vorzusehen, im Fahrzeug zum Beispiel für Fahrer und Beifahrer, wobei die beiden Hauptsichtfelder durch ein senkrecht verlaufendes Trennheizfeld voneinander getrennt sind. Auf diese Weise werden zwei ringförmig von Heizfeldbereichen umgebene Hauptsichtfelder ausgebildet, die ohne weiteres so gestaltet sein können, wie dies für die einzelnen Hauptsichtfelder weiter oben beschrieben ist. Mehr als zwei Hauptsichtfelder können sich bei sehr ausgedehnten Scheiben, zum Beispiel für die Kommandobrücke eines Schiffes, als sinnvoll ergeben.

Im Folgenden werden beispielhafte Ausführungsformen der erfindungsgemäßen beheizbaren Scheibe anhand von Figuren dargestellt.

Es zeigen schematisch
- Fig. 1:: eine beheizbare Scheibe mit einer Ringheizung mit zwei Heizdrahtteilscharen,
- Fig. 2:: eine beheizbare Scheibe mit einer Ringheizung mit drei Heizdrahtteilscharen mit einem Anschluss am oberen Scheibenrand,
- Fig. 3:: eine beheizbare Scheibe mit einer Ringheizung aus drei Heizdrahtteilscharen mit einem Anschluss am unteren Scheibenrand,
- Fig. 4:: eine beheizbare Scheibe mit einer Ringheizung mit drei Heizdrahtteilscharen mit Anschlüssen allein in den Eckbereichen,
- Fig. 5:: eine beheizbare Scheibe mit Ringheizung mit einer einzigen Heizdrahtteilschar,
- Fig. 6:: einen vergrößerten Ausschnitt aus den Figuren 1 bis 5 mit einer ersten Drahtanordnung,
- Fig. 7:: eine Vergrößerung des Ausschnitts A aus den Figuren 1 bis 5 mit einer alternativen Drahtanordnung und
- Fig. 8: eine beheizbare Scheibe mit mittlerem drahtbeheiztem Heizfeldbereich.

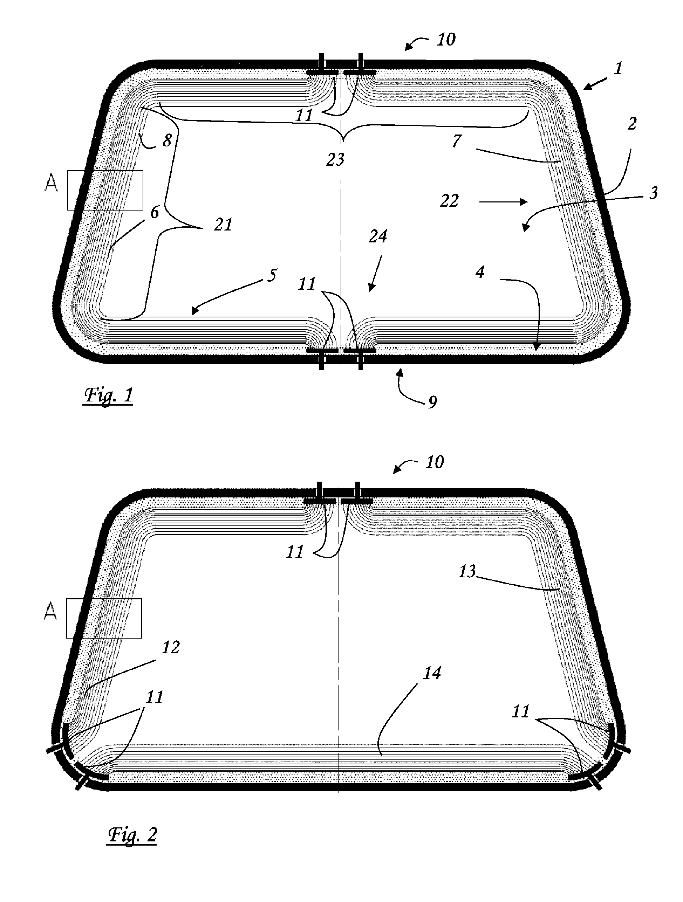

Figur 1 zeigt eine erste beispielhafte Ausführungsform einer beheizbaren Windschutzscheibe 1 mit einem schwarz ausgeführten Sichtschutzrandstreifen 2. Der Sichtschutzrandstreifen 2 dient zum Beispiel dazu, Klebebereiche, mit denen die Scheibe an der Karosserie befestigt wird, oder andere Strukturen zu verdecken, die die Optik stören würden. Der Sichtschutzrandstreifen 2 muss nicht - wie in den Figuren dargestellt - von gleichbleibender Breite sein. Damit der Übergang vom Sichtschutzrandstreifen 2 zum transparenten Sichtfeld 3 optisch weniger krass ausfällt, ist ein punktierter Übergangsbereich 4 vorgesehen, in dem ausgehend vom geschlossenen Sichtschutzrandstreifen 2 in Richtung auf das Sichtfeld 3 hin mit abnehmender Dichte Punkte angeordnet sind, so dass der Übergang zum Sichtfeld 3 hin optisch fließend wird.

Im Sichtfeld 3 ist umlaufend eine Ringheizung 5 vorgesehen, welche durch zwei Heizdrahtteilscharen 6 und 7 gebildet ist. Jede Heizdrahtteilschar 6 und 7 besteht aus einer Mehrzahl im Wesentlichen parallel zueinander verlaufender Heizdrähte 8, die jeweils am unteren Scheibenrand 9 und am oberen Scheibenrand 10 an Sammelschienen 11 unterschiedlicher Polarität elektrisch kontaktiert sind. Die Heizdrähte 8 verlaufen durch seitliche Heizfeldbereiche 21 und 22, einem oberen Heizfeldbereich 23 und einem unteren Heizfeldbereich 24. Zum Erhalt der Übersichtlichkeit sind lediglich die Ausdehnungen der Heizfeldbereiche 21 und 23 mit geschweiften Klammern gekennzeichnet. Die Heizfeldbereiche 22 und 24 sind entsprechend am Verlauf der zugehörigen Scheibenkante orientiert. Die Heizdrahtscharen 6 und 7 sorgen somit für eine ringförmige Beheizung der Windschutzscheibe 1 am äußeren Rand des Sichtfeldes 3.

Ein Hauptsichtfeld des Fahrers und auch das Hauptsichtfeld des Beifahrers, die sich beide im zentralen Bereich des Gesamtsichtfeldes 3 befinden, werden durch die Heizdrähte 8 nicht beeinträchtigt. Dem Hauptsichtfeld des Fahrers kommt eine besondere Bedeutung zu. Es muss möglichst klar durchsichtig und völlig frei von störenden Elementen sein. Aus diesem Grunde dürfen zum Beispiel Reparaturen von Steinschlagschäden innerhalb dieses Hauptsichtfeldes des Fahrers nicht durchgeführt werden. Das Hauptsichtfeld des Fahrers ist definitionsgemäß näherungsweise rechteckig, mit Zentrum in der horizontalen Blicklinie des Fahrers und weist eine Breite von etwa 40 cm und eine Höhe von etwa 50 cm auf.

Der von dem ringförmigen Drahtheizfeld 5 umgebene innere Bereich des Sichtfeldes 3 kann mittels anderer Frontscheibenbeheizungen beheizt werden, zum Beispiel mit Warmluftdüsen im Fahrzeuginnenraum oder mit vollflächiger Glasbeheizung mittels metallischer Coatingschicht oder metallhaltiger Heizfolie im Glasverbund. Unabhängig von der Art und Weise der Beheizung des vom ringförmigen Drahtheizfeld 5 umgebenen Bereichs des Sichtfeldes 3 verhindert das ringförmige Drahtheizfeld 5 Kältebrücken zum Rand hin. Damit wird auch unabhängig von der Heizmethode des inneren Bereiches diese Heizmethode effektiver. Im Falle einer Heizfolie kann diese auf Grund des ringförmigen Drahtheizfeldes 5 flächenmäßig kleiner ausgebildet werden, um bei vorgegebener Heizspannung eine höhere Flächenheizdichte in der Heizfolie zu erreichen.

Im Falle einer flächigen Beheizung mittels Heizfolie oder metallischer Coatingschicht kann das ringförmige Drahtheizfeld 5 zu der Coatingschicht bzw. der Heizfolie isoliert angeordnet sein, zum Beispiel auf der gegenüberliegenden Seite einer im Glasverbund üblichen PVB-Zwischenfolie. Es kann allerdings auch sinnvoll sein, einen Kontakt zwischen den Heizdrähten 8 und einer Heizfolie oder metallischen Coatingschicht zuzulassen.

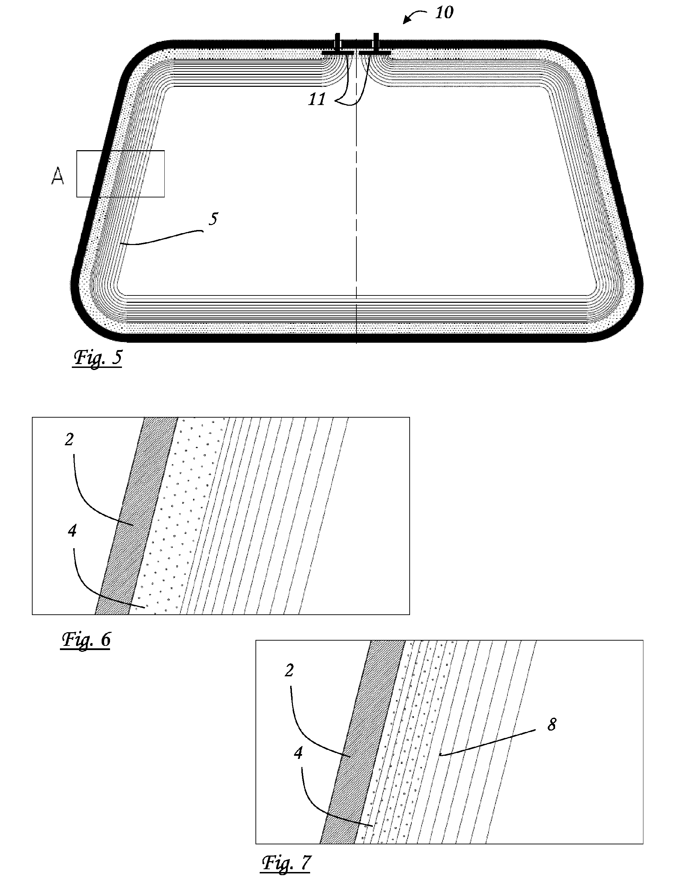

Die Figuren 6 und 7 zeigen den Ausschnitt A aus Figur 1 in alternativen Ausführungsformen in vergrößerter Darstellung. Der sich an den Sichtschutzrandstreifen 2 anschließende punktierte Übergangsbereich 4 ist hier der Einfachheit halber mit einer flächenmäßig gleichmäßigen Punktekonzentration dargestellt. Tatsächlich nimmt der durch die Punkte geschwärzte oder verdunkelte Bereich der Scheibe zum Scheibeninneren hin kontinuierlich ab. In Figur 6 schließen die Heizdrähte 8 an den punktierten Übergangsbereich 4 an, wobei die Heizdrähte 8 vom punktierten Übergangsbereich 4 an in Richtung senkrecht zum Drahtverlauf und zum Scheibeninneren hin mit einem kontinuierlich größer werdenden Abstand zueinander angeordnet sind. Dies trägt zur optischen Aufweichung des Übergangs vom Sichtschutzrandstreifen 2 zum Scheibeninneren hin bei.

In Figur 7 sind in einer alternativen Ausführungsform das Drahtheizfeld 5 mit den Heizdrähten 8 und der punktierte Übergangsbereich 4 ineinander liegend angeordnet. Durch geeignete Auswahl und Veränderung der Heizdrahtdichte in Richtung senkrecht zum Sichtschutzrandstreifen 2 kann der optische Übergangsbereich weiter vorteilhaft gestaltet werden. In einer hier nicht dargestellten Ausführungsform ist es auch denkbar, den punktierten Übergangsbereich 4 vollständig wegzulassen und den Übergang allein mit den Heizdrähten 8 zu gestalten.

Figur 2 zeigt eine alternative Ausbildungsform der Ringheizung 5, bei der drei Heizdrahtteilscharen 12, 13 und 14 vorgesehen sind. Die Sammelschienen 11 für die elektrische Kontaktierung befinden sich nun am oberen Scheibenrand 10 sowie in den unteren Ecken der Scheibe.

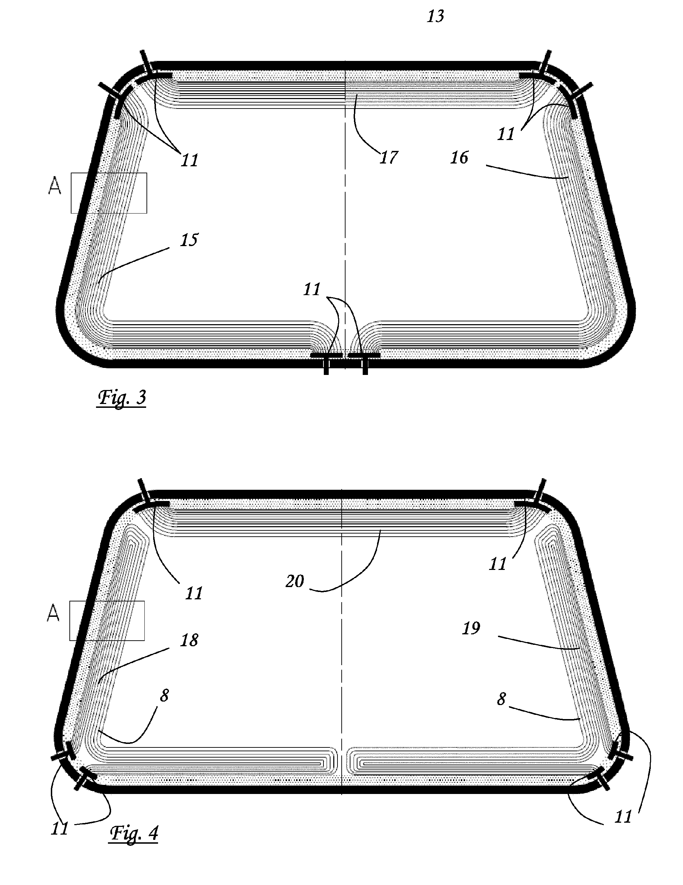

Figur 3 zeigt eine weitere Ausgestaltung, die ähnlich zu der Ausführungsform gemäß Figur 3 drei Heizdrahtteilscharen 15, 16 und 17 aufweist, wobei jedoch die

Sammelschienen 11 für die elektrische Kontaktierung an dem unteren Scheibenrand 9 und an den oberen Ecken angeordnet sind.

Figur 4 zeigt eine Ausführungsform mit drei Heizdrahtteilscharen 18 bis 20, die lediglich Kontaktierungen in den Eckbereichen der Windschutzscheibe aufweisen. Die Heizdrähte 8 der Teilheizfelder 18 und 19 sind dabei jeweils in einer Schleife geführt, so dass jeder Heizdraht der Teilheizfelder 18 und 19 entlang zweier Scheibenränder verläuft.

Figur 5 zeigt eine Ringheizung 5 aus einer einzigen Heizfeldschar, die völlig geschlossen umläuft und lediglich am oberen Scheibenrand 10 an Sammelschienen 11 kontaktiert ist.

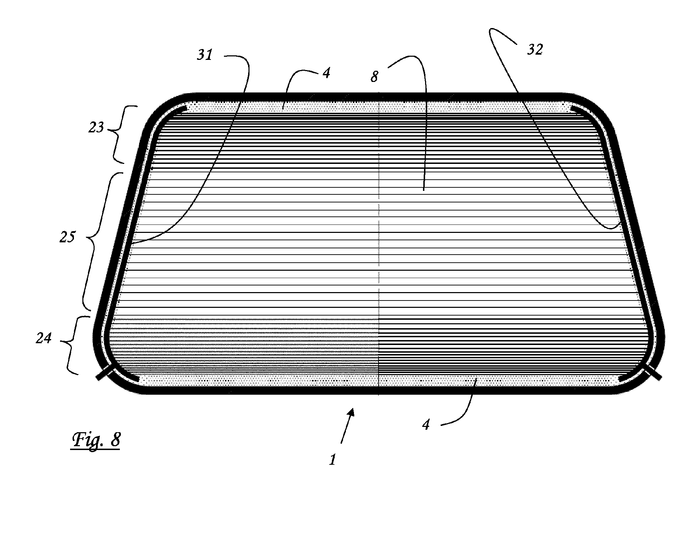

Figur 8 schließlich zeigt eine Windschutzscheibe mit zwei entlang der seitlichen Scheibenkanten verlaufenden Sammelschienen 31 und 32 unterschiedlicher Polarität, die sowohl im oberen Heizfeldbereich 23, im unteren Heizfeldbereich 24 und in einem mittleren Heizfeldbereich 25 die jeweils darin verlaufenden Heizdrähte 8 mit Strom versorgen. Der mittlere Heizfeldbereich 25 überdeckt das Hauptsichtfeld der Windschutzscheibe 1. Die im mittleren Heizfeldbereich 25 verlaufenden Heizdrähte 8 weisen zueinander einen deutlich größeren Abstand auf als die Heizdrähte im oberen Heizfeldbereich 23 und im unteren Heizfeldbereich 24. Hierdurch wird im Hauptsichtfeld die Sicht in geringerem Maße oder gar nicht beeinträchtigt. Zudem ist deutlich sichtbar, dass innerhalb des oberen Heizfeldbereichs 23 und im unteren Heizfeldbereich 24 die Abstände zwischen den Heizdrähten allmählich zunehmen, um einen gleitenden Übergangsbereich vom teilopaken Übergangsbereich 4 zum völlig transparenten Bereich zu gestalten.

### Bezugszeichenliste

- 1: Windschutzscheibe
- 2: Sichtschutz-Randstreifen
- 3: Sichtfeld
- 4: punktierter Übergangsbereich
- 5: Ringheizung
- 6: Heizdrahtteilschar
- 7: Heizdrahtteilschar
- 8: Heizdraht
- 9: unterer Scheibenrand
- 10: oberer Scheibenrand
- 11: Sammelschiene
- 12-20: Heizdrahtteilschar
- 21: seitlicher Heizfeldbereich
- 22: seitlicher Heizfeldbereich
- 23: oberer Heizfeldbereich
- 24: unterer Heizfeldbereich
- 25: mittlerer Heizfeldbereich
- 31: Sammelschiene
- 32: Sammelschiene

## Patentansprüche

1. Beheizbare Scheibe, insbesondere Fahrzeugscheibe, mit
a) einer oberen (10) und einer unteren Scheibenkante (9) sowie seitlichen Scheibenkanten,
b) einem transparenten Sichtfeld (3) mit einem zentralen Hauptsichtfeld,
c) einer Schar (12 - 20) von zumindest zum Teil im Sichtfeld angeordneten und zwischen Sammelkontaktleisten (11, 31, 32) unterschiedlicher Polarität verlaufenden Heizdrähten (8), und
d) einem zumindest eine Teilanzahl der Heizdrähte (8) aufweisenden, entlang der unteren Scheibenkante (9) unterhalb des Hauptsichtfeldes angeordneten unteren Heizfeldbereich (24),
**gekennzeichnet durch**
e) einen zumindest eine Teilanzahl der Heizdrähte (8) aufweisenden, zumindest zum Teil im transparenten Sichtfeld (3) und entlang der oberen Scheibenkante (10) oberhalb des Hauptsichtfeldes angeordneten oberen Heizfeldbereich (23), wobei im oberen Heizfeldbereich (23) die Heizdrähte (8) zueinander ungekreuzt und in ihrer Hauptverlaufsrichtung zumindest auf der überwiegenden Verlaufsstrecke im Wesentlichen parallel zur oberen Scheibenkante (10) verlaufen,
wobei
f) zwischen dem oberen (10) und unteren Heizfeldbereich (9) ein das Hauptsichtfeld überdeckender mittlerer Scheibenbereich vorgesehen ist, wobei der mittlere Scheibenbereich entweder
aa) einen mittleren Heizfeldbereich (25) mit einer gegenüber sowohl dem oberen (10) als auch dem unteren Heizfeldbereich (9) geringeren auf die Fläche bezogenen Heizleistungsdichte
oder
bb) einen Sichtbereich ohne integrierte Widerstandsheizung
umfasst.

2. Beheizbare Scheibe nach Anspruch 1, **dadurch gekennzeichnet, dass** im unteren Heizfeldbereich (24) die Heizdrähte zueinander ungekreuzt und in Ihrer Hauptverlaufsrichtung zumindest auf der überwiegenden Verlaufsstrecke im Wesentlichen parallel zur unteren Scheibenkante (9) verlaufen.

3. Beheizbare Scheibe nach Anspruch 1 oder 2, **dadurch gekennzeichnet, dass** im mittleren Heizfeldbereich (25) eine Flächenheizung vorgesehen ist, insbesondere mittels einer leitfähigen beheizbaren Beschichtung oder Folie.

4. Beheizbare Scheibe nach Anspruch 1 oder 2, **dadurch gekennzeichnet, dass** im mittleren Heizfeldbereich (25) mit in ihrer Hauptverlaufsrichtung zumindest auf der überwiegenden Verlaufsstrecke im Wesentlichen parallel zur oberen Scheibenkante (10) verlaufende Heizdrähten (8)vorgesehen sind, wobei im mittleren Heizfeldbereich (25) die Heizdrähte (8) im Vergleich zum unteren (9) und/oder oberen Heizfeldbereich (10) größere Abstände zueinander und/oder verringerte Drahtquerschnitte und/oder (einen) höhere(n) spezifische(n) Widerstand/Widerstände aufweisen.

5. Beheizbare Scheibe nach einem der vorhergehenden Ansprüche, **dadurch gekennzeichnet, dass**
a) zumindest entlang einer der seitlichen Scheibenkanten und mindestens zum Teil im transparenten Sichtfeld und neben dem Hauptsichtfeld mindestens ein seitlicher Heizfeldbereich (21, 22) vorgesehen ist und
b) in dem mindestens einen seitlichen Heizfeldbereich (21, 22) die Heizdrähte (8) zueinander ungekreuzt und in ihrer Hauptverlaufsrichtung zumindest auf der überwiegenden Verlaufsstrecke im Wesentlichen parallel zur nächstgelegenen seitlichen Scheibenkante (21, 22) verlaufen.

6. Beheizbare Scheibe nach Anspruch 5, **dadurch gekennzeichnet, dass** der untere (24) und der obere Heizfeldbereich (23) und zwei seitliche Heizfeldbereiche (21, 22) eine das Hauptsichtfeld umschließende Ringheizung (5) bilden.

7. Beheizbare Scheibe nach Anspruch 6, **dadurch gekennzeichnet, dass** der durch die Ringheizung (5) gebildete Ring allein im Bereich der Sammelkontaktschienen (11) unterbrochen ist.

8. Beheizbare Scheibe nach einem der Ansprüche 5 bis 7, **dadurch gekennzeichnet, dass** höchstens sechs, bevorzugt höchstens vier, weiter bevorzugt höchstens zwei Sammelkontaktschienen (11, 31, 32) vorgesehen sind.

9. Beheizbare Scheibe nach einem der vorhergehenden Ansprüche, **dadurch gekennzeichnet, dass** die beheizbare Scheibe einen opaken Sichtschutzrand (2) aufweist und mindestens einer der seitlichen Heizfeldbereiche (21, 22) und/oder der untere (24) und/oder der obere Heizfeldbereich (23) zumindest mit einem Heizfeldteilbereich in Richtung auf das Hauptsichtfeld an dem opaken Sichtschutzrand (2) anschließt.

10. Beheizbare Scheibe nach Anspruch 9, **dadurch gekennzeichnet, dass** sich am opaken Sichtschutzbereich (2) ein teilopaker Sichtschutzbereich (4) anschließt.

11. Beheizbare Scheibe nach einem der Ansprüche 1 bis 8, **dadurch gekennzeichnet, dass** die beheizbare Scheibe (1) einen opaken Sichtschutzrand (2) und einen sich an den opaken Sichtschutzrand (2) in Richtung auf das Hauptsichtfeld anschließenden teilopaken Sichtschutzübergangsbereich (4) aufweist und mindestens einer der seitlichen Heizfeldbereiche (21, 22) und/oder der untere (24) und/oder der obere Heizfeldbereich (23) in Richtung auf das Hauptsichtfeld an dem teilopaken Sichtschutzübergangsbereich (4) anschließt.

12. Beheizbare Scheibe nach einem der vorhergehenden Ansprüche, **dadurch gekennzeichnet, dass** die in Richtung senkrecht zur nächsten Scheibenkante (9, 10) gegebenen Abstände zwischen benachbarten Heizdrähten (8) in Richtung auf das Hauptsichtfeld zunehmen.

13. Beheizbare Scheibe nach einem der vorhergehenden Ansprüche, **dadurch gekennzeichnet, dass** die Heizfeldbereiche (21 - 25) eine senkrecht zur zugehörigen Scheibenkante gemessene Breite von maximal 150 mm, vorzugsweise maximal 120 mm, weiter vorzugsweise maximal 90 mm, weiter vorzugsweise maximal 60 mm, weiter vorzugsweise maximal 40 mm im transparenten Bereich aufweisen.

14. Beheizbare Scheibe nach einem der vorhergehenden Ansprüche, **dadurch gekennzeichnet, dass** mindestens ein zweites von Heizfeldbereichen (21 - 25) umgebenes Hauptsichtfeld vorgesehen ist, wobei zwischen benachbarten Hauptsichtfeldern mindestens ein Trennheizfeld mit zumindest in ihrer Hauptverlaufsrichtung zumindest auf der überwiegenden Verlaufsstrecke im Wesentlichen senkrecht zur oberen Scheibenkante (23) verlaufenden Heizdrähten (8) angeordnet ist.
